# EUROPEAN PATENT APPLICATION

(11) **EP 4 712 298 A1**
(43) Date of publication of application: **18.03.2026**
(21) Application number: 24866978.0
(22) Date of filing: 27.06.2024
(51) Int. Cl.: H02J 7/00

(54) **CHARGING CONTROL METHOD AND APPARATUS, AND VEHICLE-BORNE CHARGING DEVICE AND VEHICLE**

(30) Priority: 21.09.2023 CN 202311224318
(71) Applicant: Great Wall Motor Company Limited, Baoding, Hebei 071000 (CN)
(72) Inventor: XU, Rongchang, Baoding, Hebei 071000 (CN); LU, Xiaolong, Baoding, Hebei 071000 (CN); LIU, Wentao, Baoding, Hebei 071000 (CN); SUN, Jiahui, Baoding, Hebei 071000 (CN)
(74) Representative: Michalski Hüttermann & Partner Patentanwälte mbB
(86) International application number: PCT/CN2024/101947
(87) International publication number: WO 2025/060559

(57) **Abstract**

The present invention relates to a charging control method and apparatus, a vehicle-mounted charging device, and a vehicle, the method includes: determining a target proprietary protocol chip corresponding to a device parameter of a device to be charged; triggering an initialization of a power chip in the charging device based on a comparison between a currently running charging protocol of a charging device and a target charging protocol to change the currently running charging protocol to the target charging protocol; acquiring status information of the power chip; triggering the charging device to charge the device to be charged using the target proprietary protocol chip after the status information indicates that the initialization of the power chip has been completed. This method ensures that the charging device is triggered to charge the device to be charged only after the power chip has completed the initialization, preventing the charging device from generating a runaway current and thus avoiding damage to the proprietary protocol chip from the runaway current.

## Description

### CROSS-REFERENCE TO RELATED APPLICATIONS

The present application claims priority to the Chinese Patent Application No. 202311224318.3, filed on September 21, 2023, entitled 'Charging control method and apparatus, vehicle-mounted charging device, and vehicle', and the contents of the aforementioned application are hereby incorporated by reference in their entireties.

### TECHNICAL FIELD

The present invention relates to the field of wireless charging, and in particular, to a charging control method and apparatus, a vehicle-mounted charging device, and a vehicle.

### BACKGROUND

In order to meet charging requirements of a vehicle-mounted wireless charging device for different mobile phones, the vehicle-mounted wireless charging device needs to integrate proprietary protocol chips from various mobile phone manufacturers. The different chips include charging protocols provided by exclusive mobile phone manufacturers, thus enabling the vehicle-mounted wireless charging device to charge mobile phones from different mobile phone manufacturers.

In related charging scenarios, when the charging device switches the proprietary protocol chip to charge a corresponding mobile phone, a runaway current may be generated internally within the charging device, causing damage to a currently running proprietary protocol chip.

### SUMMARY

The present invention provides a charging control method and apparatus, a vehicle-mounted charging device, and a vehicle, aiming to prevent a proprietary protocol chip of a charging device from being damaged by a runaway current.

To achieve above purpose, the present invention provides the following technical solutions:
A charging control method, applied to a charging device, includes:
determining a target proprietary protocol chip corresponding to a device parameter of a device to be charged, where the target proprietary protocol chip includes a target charging protocol corresponding to the device parameter;
triggering an initialization of a power chip in the charging device based on a comparison between a currently running charging protocol of the charging device and the target charging protocol to change the currently running charging protocol to the target charging protocol;
acquiring status information of the power chip, where the status information is used to indicate a progress of the initialization of the power chip; and
triggering the charging device to charge the device to be charged using the target proprietary protocol chip after the status information indicates that the initialization of the power chip has been completed.

Optionally, the triggering the initialization of the power chip in the charging device based on the comparison between the currently running charging protocol of the charging device and the target charging protocol includes:
if the currently running charging protocol is inconsistent with the target charging protocol, triggering the initialization of the power chip in the charging device.

Optionally, the method further includes:
if the currently running charging protocol is consistent with the target charging protocol, triggering the target proprietary protocol chip to regulate a charging parameter of the power chip to enable the power chip to charge the device to be charged based on the regulated charging parameter.

Optionally, the acquiring the status information of the power chip includes:
sending a status access command to the power chip to obtain at least one piece of status information fed back by the power chip.

Optionally, after the sending the status access command to the power chip to obtain the at least one piece of status information fed back by the power chip, the method further includes:
counting the number of obtained first status information to acquire a first value, where the first status information is status information indicating that the initialization of the power chip has not been completed;
acquiring an operation log of the power chip if the first value is greater than a threshold; and
prohibiting the power chip from charging the device to be charged if the operation log indicates that the power chip reports an error.

Optionally, after the prohibiting the power chip from charging the device to be charged, the method further includes:
controlling an alarm module in the charging device to be placed in a working state corresponding to the error.

Optionally, the triggering the charging device to charge the device to be charged using the target proprietary protocol chip after the status information indicates that the initialization of the power chip has been completed includes:
after the status information indicates that the initialization of the power chip has been completed, triggering the target proprietary protocol chip to regulate a charging parameter of the power chip to enable the power chip to charge the device to be charged based on the regulated charging parameter.

Optionally, the triggering the target proprietary protocol chip to regulate the charging parameter of the power chip includes:
acquiring status information of the target proprietary protocol chip in advance; and
triggering the target proprietary protocol chip to regulate the charging parameter of the power chip if the status information of the target proprietary protocol chip indicates that the chip operates normally.

Optionally, after the acquiring the status information of the target proprietary protocol chip, the method further includes:
prohibiting triggering the target proprietary protocol chip to regulate the charging parameter of the power chip if the status information of the target proprietary protocol chip indicates that the chip operates abnormally.

Optionally, the method further includes:
if the charging device fails to contain the target proprietary protocol chip, prohibiting the charging device from charging the device to be charged.

Optionally, the method further includes:
acquiring a difference between the charging parameters of the power chip in any two adjacent specified time periods during a process of the power chip charging the device to be charged based on the regulated charging parameter;
suspending the charging the device to be charged by the power chip if the difference fails to meet a preset condition; and
after controlling the target proprietary protocol chip to restart, triggering the target proprietary protocol chip which has been restarted to regulate the charging parameter of the power chip to enable the power chip to charge the device to be charged based on the regulated charging parameter.

Optionally, after the sending the status access command to the power chip to obtain the at least one piece of status information fed back by the power chip, the method further includes:
calculating a time difference between a feedback time of an n-th piece of status information and a sending time of an n-th status access command, where n is a positive integer; and
triggering a restart of the power chip and sending the status access command to the power chip which has been restarted if the time difference is greater than a specified time threshold.

A charging control apparatus, including:
a chip determination unit, configured to determine a target proprietary protocol chip corresponding to a device parameter of a device to be charged, where the target proprietary protocol chip includes a target charging protocol corresponding to the device parameter;
an initialization unit, configured to trigger an initialization of a power chip in the charging device based on a comparison between a currently running charging protocol of the charging device and the target charging protocol to change the currently running charging protocol to the target charging protocol;
a status inquiry unit, configured to acquire status information of the power chip, where the status information is used to indicate a progress of the initialization of the power chip; and
a charging trigger unit, configured to trigger the charging device to charge the device to be charged using the target proprietary protocol chip after the status information indicates that the initialization of the power chip has been completed.

Optionally, the status inquiry unit is specifically configured to:
send a status access command to the power chip to obtain at least one piece of status information fed back by the power chip.

Optionally, the initialization unit is specifically configured to:
if the currently running charging protocol is inconsistent with the target charging protocol, trigger the initialization of the power chip in the charging device.

Optionally, the charging trigger unit is further configured to:
if the currently running charging protocol is consistent with the target charging protocol, trigger the target proprietary protocol chip to regulate a charging parameter of the power chip to enable the power chip to charge the device to be charged based on the regulated charging parameter.

Optionally, the status inquiry unit is further configured to:
count the number of obtained first status information to acquire a first value, where the first status information is status information indicating that the initialization of the power chip has not been completed;
acquire an operation log of the power chip when the first value is greater than a threshold; and
if the operation log indicates that the power chip reports an error, prohibit the power chip from charging the device to be charged.

Optionally, the device further includes:
an error alarm unit, configured to control an alarm module in the charging device to be placed in a working state corresponding to the error.

Optionally, the charging trigger unit is specifically configured to:
trigger the target proprietary protocol chip to regulate a charging parameter of the power chip after the status information indicates that the initialization of the power chip has been completed, to enable the power chip to charge the device to be charged based on the regulated charging parameter.

Optionally, the charging trigger unit is specifically configured to:
acquire status information of the target proprietary protocol chip in advance; and
trigger the target proprietary protocol chip to regulate the charging parameter of the power chip if the status information of the target proprietary protocol chip indicates that the chip operates normally.

Optionally, the charging trigger unit is further configured to:
prohibit triggering the target proprietary protocol chip to regulate the charging parameter of the power chip if the status information of the target proprietary protocol chip indicates that the chip operates abnormally.

Optionally, the chip determination unit is further configured to:
if the charging device fails to contain the target proprietary protocol chip, prohibit the charging device from charging the device to be charged.

Optionally, the charging trigger unit is further configured to:
acquire a difference between the charging parameters of the power chip in any two adjacent specified time periods during a process of the power chip charging the device to be charged based on the regulated charging parameter;
suspend the charging the device to be charged by the power chip if the difference fails to meet a preset condition; and
after the target proprietary protocol chip is controlled to restart, trigger the target proprietary protocol chip which has been restarted to regulate the charging parameter of the power chip to enable the power chip to charge the device to be charged based on the regulated charging parameter.

Optionally, the status inquiry unit is further configured to:
calculate a time difference between a feedback time of an n-th piece of status information and a sending time of an n-th status access command, where n is a positive integer; and
trigger a restart of the power chip and send the status access command to the power chip which has been restarted if the time difference is greater than a specified time threshold.

A vehicle-mounted charging device, which includes a stored program, where the charging control method described above is implemented when the stored program is executed by a processor.

A vehicle, which includes the vehicle-mounted charging device, and the vehicle-mounted charging device is configured to implement the charging control method described above.

A computer device, which includes a processor, a memory, and a bus, where the processor and the memory are connected via the bus; and
the memory is configured to store a program, the processor is configured to execute the program, and the charging control method described above is implemented when the program is executed by the processor.

A computer-readable storage medium, which includes a stored program, where the charging control method described above is implemented when the program is executed by a processor.

The technical solution provided by the present invention determines a target proprietary protocol chip corresponding to a device parameter of a device to be charged, triggers an initialization of a power chip in a charging device based on a comparison between a currently running charging protocol of the charging device and a target charging protocol to change the currently running charging protocol to the target charging protocol, and acquires status information of the power chip and triggers the charging device to charge the device to be charged using the target proprietary protocol chip after the status information indicates that the initialization of the power chip has been completed. In the present invention, the status information of the power chip is obtained after the power chip is triggered to be initialized, and the charging device is triggered to charge the device to be charged only after the status information indicates that the initialization of the power chip has been completed, thereby avoiding a generation of a runaway current caused by the charging device performing a charging service before the power chip completes initialization, so that the proprietary protocol chip in the charging device no longer suffers from a damage of the runaway current.

### BRIEF DESCRIPTION OF THE DRAWINGS

FIG. 1 is a schematic flowchart of a charging control method according to an embodiment of the present invention.
FIG. 2 is a schematic flowchart of another charging control method according to an embodiment of the present invention.
FIG. 3 is a schematic flowchart of another charging control method according to an embodiment of the present invention.
FIG. 4 is a schematic diagram of an architectural of a charging control apparatus according to an embodiment of the present invention.

### DETAILED DESCRIPTION OF THE EMBODIMENTS

The applicant discovered that in an existing software strategy of vehicle-mounted wireless charging devices, after it is determined that a currently running charging protocol of a charging device fails to support a device to be charged, it is necessary to trigger a power chip to perform initialization to replace the currently running charging protocol with a target charging protocol that supports charging the device to be charged, so that a responsibility of a charging task is transferred from a currently running proprietary protocol chip to a target proprietary protocol chip. The transfer process takes approximately 5 ms. Due to a difference in an initialization capability of the power chip, a time required for the power chip to perform the initialization may exceed 5 ms. In this case, the power chip, which has not completed the initialization, is in an uncontrollable state. Triggering the charging device to perform a charging service while the power chip is in the uncontrollable state will cause the charging device to internally generate a runaway current, resulting in the proprietary protocol chip in the charging device being damaged by the runaway current.

Based on the above discovery, the present invention provides a charging control method to ensure that the charging device is triggered to charge the device to be charged only after the power chip has completed the initialization, so that the charging device is prevented from generating the runaway current, thereby avoiding the proprietary protocol chip in the charging device from being damaged by the runaway current.

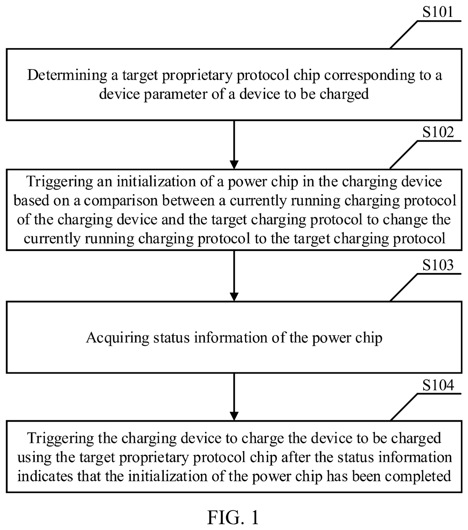

As shown in FIG. 1, FIG. 1 is a schematic flowchart of a charging control method according to an embodiment of the present invention, and the method includes the following steps.

S101: determining a target proprietary protocol chip corresponding to a device parameter of a device to be charged.

A specific implementation process of the determining the target proprietary protocol chip corresponding to the device parameter of the device to be charged may include: acquiring a device parameter of the device to be charged, and determining the target proprietary protocol chip from a plurality of proprietary protocol chips of the charging device based on the device parameter, where the target proprietary protocol chip includes a target charging protocol corresponding to the device parameter.

In some examples, the device to be charged includes, but is not limited to, a mobile phone, a smartwatch, a tablet computer, and other devices.

In some examples, the device parameter of the device to be charged includes, but is not limited to, a device model, a device manufacturer, a device power supply model, and the like.

It can be understood that different device parameters may correspond to a same charging protocol or different charging protocols. A specified correspondence between the charging protocol and the device parameter is usually determined by a device manufacturer.

In some examples, the charging device integrates a plurality of proprietary protocol chips to meet wireless charging needs of electronic devices with different device parameters. Before performing the wireless charging on the device to be charged, the device to be charged will allow the charging device to charge the device to be charged only the target proprietary protocol chip corresponding to the device parameter of the device to be charged is selected.

In a possible implementation, the charging device sends an inquiry signal to the device to be charged through a built-in antenna, and the device to be charged responds to the inquiry signal by feeding back its own device parameter to the charging device. A device parameter table is prerecorded in the charging device, and the device parameter table contains a correspondence between device models and charging protocols. By querying the device parameter table, the target charging protocol corresponding to the device parameter of the device to be charged may be obtained.

Optionally, if the charging device does not contain the target proprietary protocol chip, the charging device is prohibited from charging the device to be charged.

It should be noted that if the charging device does not contain the target proprietary protocol chip, it may be determined that a charging interface of the device to be charged cannot accept a charging service of the charging device. Therefore, the charging device is prohibited from charging the device to be charged, that is, a charging operation of the charging device is suspended.

S102: triggering an initialization of a power chip in the charging device based on a comparison between a currently running charging protocol of the charging device and the target charging protocol to change the currently running charging protocol to the target charging protocol.

If the currently running charging protocol of the charging device is inconsistent with the target charging protocol, the initialization of the power chip in the charging device is triggered to change the currently running charging protocol to the target charging protocol.

It should be noted that the initialization of the power chip essentially changes the currently running charging protocol inside the power chip to the target charging protocol. A specific implementation process and principle of the initialization of the power chip are well-known common knowledge familiar to those skilled in the art and will not be repeated here.

Optionally, if the currently running charging protocol is consistent with the target charging protocol, the target proprietary protocol chip is triggered to regulate a charging parameter of the power chip, so that the power chip can charge the device to be charged based on the regulated charging parameter.

It can be understood that if the currently running charging protocol is consistent with the target charging protocol, it means that the proprietary protocol chip, which controls the charging parameter of the power chip in the charging device, is the target charging protocol chip. In this case, the charging device is directly triggered to charge the device to be charged without triggering the initialization of the power chip.

In some examples, the currently running charging protocol in the charging device may be determined by reading a charging protocol running in the power chip.

S103: Acquiring status information of the power chip.

The status information is configured to indicate a progress of the initialization of the power chip.

Optionally, a specific implementation process of the acquiring the status information of the power chip may include: sending a status access command to the power chip to obtain at least one piece of status information fed back by the power chip.

In some examples, after the initialization of the power chip is triggered, the status access command may be sent to the power chip at a preset time interval to obtain at least one piece of status information fed back by the power chip.

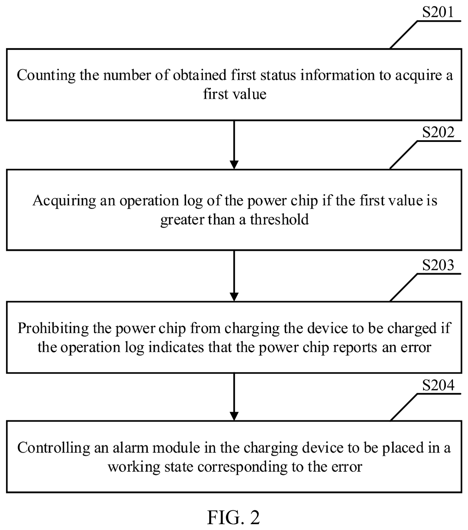

It should be noted that if the power chip is abnormal, a plurality of pieces of status information fed back by the power chip over a long period will indicate that the power chip has not completed initialization. To promptly detect abnormalities of the power chip, reference may be made to steps and explanations shown in FIG. 2.

In some examples, an efficiency of the initialization of the power chip may be interfered with by an internal factor of the power chip. In practical applications, an interference of the internal factor of the power chip may be eliminated by restarting the power chip, so as to improve the efficiency of the initialization of the power chip.

Optionally, a time difference between a feedback time of an n-th piece of status information and a sending time of an n-th status access command is calculated, where n is a positive integer. If the time difference is greater than a specified time threshold, a restart of the power chip is triggered and the status access command is send to the power chip which has been restarted.

It can be understood that if the time difference is greater than the specified time threshold, it is determined that an initialization process of the power chip is interfered with by the internal factor of the power chip, and the power chip needs to be triggered to restart. That is to say, after each time a status inquiry command is sent to the power chip, the time when the power chip feeds back the status information may be used to determine whether there is an interference inside the power chip, so as to determine whether to trigger the power chip to restart.

S104: Triggering the charging device to charge the device to be charged using the target proprietary protocol chip after the status information indicates that the initialization of the power chip has been completed.

The status information indicates that the power chip has completed initialization, and it means that the power chip is in a controllable state at this time. In this case, if the power chip is triggered to charge the device to be charged, a runaway current will not be generated inside the charging device, thereby preventing the proprietary protocol chip in the charging device from being damaged by the runaway current.

Optionally, after the status information indicates that the initialization of the power chip has been completed, a specific implementation process of the triggering the charging device to charge the device to be charged using the target proprietary protocol chip may include: after the status information indicates that the initialization of the power chip has been completed, triggering the target proprietary protocol chip to regulate the charging parameter of the power chip to enable the power chip to charge the device to be charged based on the regulated charging parameter.

It should be noted that the target proprietary protocol chip can charge the device to be charged normally only when the target proprietary protocol chip operates normally. If the target proprietary protocol chip operates abnormally, it may lead to charging failure, thereby affecting a charging experience.

Optionally, the status information of the target proprietary protocol chip is obtained in advance, and the target proprietary protocol chip is triggered to regulate the charging parameter of the power chip if the status information of the target proprietary protocol chip indicates that the chip operates normally. If the status information of the target proprietary protocol chip indicates that the chip operates abnormally, it is prohibited to trigger the target proprietary protocol chip to regulate the charging parameter of the power chip.

In some examples, the status information of the target proprietary protocol chip may be obtained by accessing the target proprietary protocol chip.

In some examples, causes that lead to the abnormality of the target proprietary protocol chip include, but are not limited to, an abnormal power supply, an excessively high temperature, and the like.

In one possible implementation, if the status information of the target proprietary protocol chip indicates that a power supply is abnormal, it is determined that the target proprietary chip is unable to undertake the charging work, so that the charging device is suspended from charging the device to be charged, and users may also be prompted that the charging device is abnormal, so that the user may repair the charging device in time.

In one possible implementation, a proprietary protocol chip A is currently responsible for charging, and the target proprietary protocol chip is a proprietary protocol chip B. After triggering the initialization of the power chip, the status information of the power chip is tracked in real time, and after determining that the power chip has completed initialization, the proprietary protocol chip B is triggered to regulate the charging parameter of the power chip to enable the power chip to charge the device to be charged based on the regulated charging parameter.

In the related art, the charging device includes a plurality of proprietary protocol chips and one power chip, charging protocols contained in the plurality of proprietary protocol chips are different from each other, and each proprietary protocol chip is used to regulate the charging parameter of the power chip, so that the power chip may charge other devices based on an adjusted charging parameter, thereby realizing the charging service function of the charging device. Generally speaking, when the power chip performs charging, a charging protocol of the proprietary protocol chip that currently regulating the charging parameter must be pre-loaded inside the power chip. For this reason, in a process of switching the proprietary protocol chip to regulate the power chip, the charging protocol inside the power chip needs to be updated. If the currently running charging protocol on the power chip fails to correspond to the proprietary protocol chip that currently regulating the charging parameter, it will cause a runaway current to be generated inside the charging device, thus affecting each proprietary protocol chip in the charging device.

It should be noted that during a process of the power chip charging the device to be charged based on the regulated charging parameter, the charging parameter changes in real time. If the charging parameter changes significantly within a preset time period, it indicates a problem with the target protocol chip. For example, if the charging device is subjected to an external impact, an interference may occur inside the target protocol chip, and the charging parameter of the power chip cannot be effectively regulated. In the related art, when the proprietary protocol chip is unable to effectively regulate the charging parameter, the proprietary protocol chip may be restarted to restore normal operational capability.

Optionally, during a process of the power chip charging the device to be charged based on the regulated charging parameter, a difference of the charging parameter in any two adjacent specified time periods of the power chip is obtained. If the difference fails to meet the preset conditions, the power chip is suspended from charging the device to be charged. After the target proprietary protocol chip is controlled to restart, the restarted target proprietary protocol chip is triggered to regulate the charging parameter of the power chip, so that the power chip charges the device to be charged based on the regulated charging parameter.

The process shown in the S101 to S104 described above, the status information of the power chip is obtained after the power chip is triggered to be initialized, and the charging device is triggered to charge the device to be charged only after the status information indicates that the initialization of the power chip has been completed, thereby avoiding a generation of the runaway current caused by the charging device performing the charging service before the power chip completes initialization, so that the proprietary protocol chip in the charging device no longer suffers from the damage of the runaway current.

As shown in FIG. 2, FIG. 2 is a schematic flowchart of another charging control method according to an embodiment of the present invention, and the method includes following steps.

S201: Counting the number of obtained first status information to acquire a first value.

The first status information is status information configured to indicate that an initialization of a power chip has not been completed.

In some examples, by sending a plurality of status access commands to the power chip within a specified time period, the status information corresponding to the plurality of status access commands fed back by the power chip may be obtained, and the number of the first status information is determined by parsing the plurality of pieces of status information.

S202: Acquiring an operation log of the power chip if the first value is greater than a threshold.

If the first value is greater than the threshold, it indicates that the power chip has potential abnormalities, and the power chip needs to be further investigated to determine whether the power chip is abnormal.

In some examples, the operation log of the power chip will record a daily behavior of the power chip. By analyzing the daily behavior, it may effectively determine whether the power chip is abnormal.

S203: Prohibiting the power chip from charging the device to be charged if the operation log indicates that the power chip reports an error.

If the operation log indicates that the power chip reports an error, it may be determined that the power chip is abnormal. In order to avoid a charging device generating a runaway current during an execution of a charging service due to an abnormality of the power chip, the power chip is prohibited from charging the device to be charged, that is, the charging device is prohibited from charging the device to be charged.

S204: Controlling an alarm module in the charging device to be placed in a working state corresponding to the error.

After prohibiting the charging device from charging the device to be charged, the user needs to be notified, so that the user may take corresponding measures in time. For this reason, the alarm module in the charging device is controlled to be placed in the working state corresponding to the error.

In some examples, the alarm module includes a variety of working states, which may be realized based on a variety of alert methods, such as an audible and visual alert like a buzzer alarm and a warning light turning on.

In the process shown in S201 to S204 described above, whether the power chip is abnormal may be determined by the status information of the power chip. If the power chip is determined to be abnormal, the charging device is prohibited from charging the device to be charged, and an alert is sent to the user, thereby avoiding a generation of the runaway current by the charging device and preventing the proprietary protocol chip of the charging device from being damaged by the runaway current.

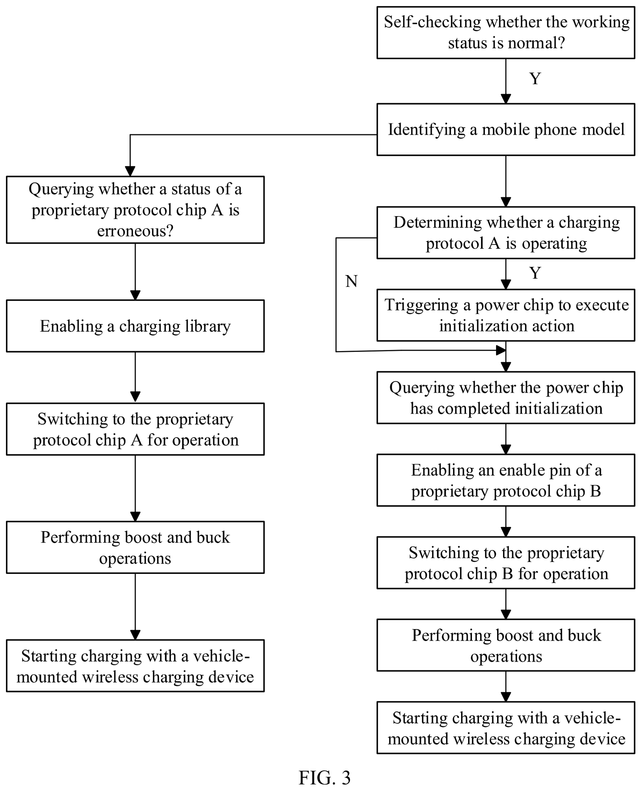

To facilitate understanding of the process shown in the above embodiments, as shown in FIG. 3, the embodiments of the present invention is described based on a charging control logic of a vehicle-mounted wireless charging device shown in FIG. 3, and the description content includes following steps.

Step 1: Starting a self-check of the vehicle-mounted wireless charging device to obtain a working status of the vehicle-mounted wireless charging device.

In some examples, by starting the self-check of the vehicle-mounted wireless charging device, it is possible to obtain a remaining power supply of the vehicle-mounted wireless charging device. If the remaining power supply meets a charging demand, the vehicle-mounted wireless charging device is allowed to charge a target device.

In some examples, by starting the self-check of the vehicle-mounted wireless charging device, it is also possible to obtain status information of each proprietary protocol chip in the vehicle-mounted wireless charging device, so as to determine whether each proprietary protocol chip operates normally.

Step 2: Acquiring a phone model of a phone to be charged and determining a target proprietary protocol chip based on the phone model.

In some examples, the phone model is a specific manifestation of a device parameter.

Step 3: Determining a currently running charging protocol A of the vehicle-mounted wireless charging device and determining whether the currently running charging protocol A is consistent with a target charging protocol.

In some examples, the vehicle-mounted wireless charging device includes a proprietary protocol chip A and a proprietary protocol chip B. The proprietary protocol chip A includes the charging protocol A, and the proprietary protocol chip B includes a charging protocol B.

Step 4: If the currently running charging protocol A is consistent with the target charging protocol, determining whether the proprietary protocol chip A operates normally based on status information of the proprietary protocol chip A.

Step 5: If the proprietary protocol chip A operates normally, triggering the proprietary protocol chip A to regulate a charging parameter of a power chip to enable the power chip to charge the phone to be charged based on the regulated charging parameter.

In some examples, regulating the charging parameter of the power chip mostly involves controlling the power supply voltage parameter of the power chip, such as increasing or decreasing a voltage.

In some examples, if the currently running charging protocol A is consistent with the target charging protocol, a charging library of the power chip continues to run the charging protocol A without changing to another charging protocol.

Step 6: If the currently running charging protocol A is inconsistent with the target charging protocol and the target charging protocol is the charging protocol B, triggering an initialization of the power chip to change the currently running charging protocol A to the charging protocol B.

Step 7: Sending a status access command to the power chip to acquire status information fed back by the power chip.

Step 8: After the status information indicates that the initialization of the power chip has been completed, triggering the proprietary protocol chip B to regulate the charging parameter of the power chip to enable the power chip to charge the phone to be charged based on the regulated charging parameter.

In the each step shown above, the status information of the power chip is obtained after the initialization of the power chip is triggered, and the charging device is triggered to charge the device to be charged only after the status information indicates that the initialization of the power chip has been completed, thereby avoiding a generation of a runaway current caused by the charging device performing a charging service before the power chip completes initialization, so that the proprietary protocol chip in the charging device no longer suffers from a damage of the runaway current.

Corresponding to the charging control method provided in the above embodiments of the present invention, embodiments of the present invention also provide a charging control apparatus.

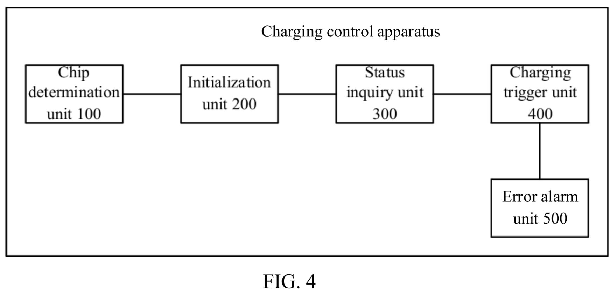

As shown in FIG. 4, FIG. 4 is a schematic diagram of an architectural of a charging control apparatus according to an embodiment of the present invention, and the apparatus includes following units.

A chip determination unit 100, configured to determine a target proprietary protocol chip corresponding to a device parameter of a device to be charged, where the target proprietary protocol chip includes a target charging protocol corresponding to the device parameter.

Optionally, the chip determination unit 100 is specifically configured to acquire the device parameter of the device to be charged and determine the target proprietary protocol chip from a plurality of proprietary protocol chips of a charging device based on the device parameter.

Optionally, the chip determination unit 100 is further configured to prohibit the charging device from charging the device to be charged if the charging device fails to contain the target proprietary protocol chip.

An initialization unit 200, configured to trigger an initialization of a power chip in the charging device based on a comparison between a currently running charging protocol of the charging device and the target charging protocol to change the currently running charging protocol to the target charging protocol.

Optionally, the initialization unit 200 is specifically configured to: if the currently running charging protocol of the charging device is inconsistent with the target charging protocol, trigger the initialization of the power chip in the charging device to change the currently running charging protocol to the target charging protocol.

A status inquiry unit 300, configured to acquire status information of the power chip, where the status information is used to indicate a progress of the initialization of the power chip.

Optionally, the status inquiry unit is specifically configured to send a status access command to the power chip to obtain at least one piece of status information fed back by the power chip.

Optionally, the status inquiry unit 300 is further configured to: count the number of obtained first status information to obtain a first value, where the first status information is status information indicating that the initialization of the power chip has not been completed; acquire an operation log of the power chip if the first value is greater than a threshold; and prohibit the power chip from charging the device to be charged if the operation log indicates that the power chip reports an error.

Optionally, the status inquiry unit 300 is further configured to: calculate a time difference between a feedback time of an n-th piece of status information and a sending time of an n-th status access command, where n is a positive integer; and trigger a restart of the power chip and send the status access command to the power chip which has been restarted if the time difference is greater than a specified time threshold.

A charging trigger unit 400, configured to trigger the charging device to charge the device to be charged using the target proprietary protocol chip after the status information indicates that the initialization of the power chip has been completed.

Optionally, the charging trigger unit 400 is specifically configured to: after the status information indicates that the initialization of the power chip has been completed, trigger the target proprietary protocol chip to regulate a charging parameter of the power chip to enable the power chip to charge the device to be charged based on the regulated charging parameter.

Optionally, the charging trigger unit 400 is further configured to: if the currently running charging protocol is consistent with the target charging protocol, trigger the target proprietary protocol chip to regulate the charging parameter of the power chip to enable the power chip to charge the device to be charged based on the regulated charging parameter.

Optionally, the charging trigger unit 400 is specifically configured to: acquire status information of the target proprietary protocol chip in advance; and trigger the target proprietary protocol chip to regulate the charging parameter of the power chip if the status information of the target proprietary protocol chip indicates that the chip operates normally.

Optionally, the charging trigger unit 400 is further configured to prohibit triggering the target proprietary protocol chip to regulate the charging parameter of the power chip if the status information of the target proprietary protocol chip indicates that the chip operates abnormally.

Optionally, the charging trigger unit 400 is further configured to: acquire a difference between the charging parameters of the power chip in any two adjacent specified time periods during a process of the power chip charging the device to be charged based on the regulated charging parameter; suspend the charging the device to be charged by the power chip if the difference fails to meet a preset condition; and after the target proprietary protocol chip is controlled to restart, trigger the target proprietary protocol chip which has been restarted to regulate the charging parameter of the power chip to enable the power chip to charge the device to be charged based on the regulated charging parameter.

An error alarm unit 500, configured to control an alarm module in the charging device to be placed in a working state corresponding to the error.

Each unit described above, the status information of the power chip is obtained after the initialization of the power chip is triggered, and the charging device is triggered to charge the device to be charged only after the status information indicates that the initialization of the power chip has been completed, thereby avoiding a generation of a runaway current caused by the charging device performing a charging service before the power chip completes initialization, so that the proprietary protocol chip in the charging device no longer suffers from a damage of the runaway current.

Each unit described above may be implemented by one or more processors.

It may be understood that the processor in the embodiments of the present invention may be a Central Processing Unit (CPU), or other general processor, Digital Signal Processor (DSP), Application Specific Integrated Circuit (ASIC), Field Programmable Gate Array (FPGA) or other programmable logic devices, transistor logic devices, hardware components, or any combination thereof. A general processor may be a microprocessor, or any conventional processor.

The present invention also provides a computer device, and the computer device includes: a processor, a memory, and a bus. The processor and the memory are connected via the bus, the memory is configured to store a program, and the processor is configured to execute the program, where the charging control method provided in the above embodiments is implemented when the program is executed.

The present invention also provides a computer-readable storage medium. The computer-readable storage medium includes a stored program, where the charging control method provided in the above embodiments is implemented when the program is executed.

The present invention also provides a vehicle. The vehicle includes a vehicle-mounted charging device, and the vehicle-mounted charging device is configured to execute the charging control method provided in the above embodiments.

The present invention also provides a vehicle-mounted charging device. The vehicle-mounted charging device includes a stored program, and where the charging control method provided in the above embodiments is implemented when the program is executed.

When the functions described in the method of the embodiments of the present invention are implemented in the form of software functional units and sold or used as independent products, they may be stored in a computer-readable storage medium. Based on this understanding, the part of the embodiments of the present invention that contributes to conventional technologies or the part of the technical solution may be embodied in the form of a software product, which is stored in a storage medium and includes several instructions to enable a computing device (which may be a personal computer, a server, a mobile computing device, a network device, or the like.) to execute all or part of the steps of the methods described in the various embodiments of the present invention. The aforementioned storage medium includes: a USB drive, a mobile hard drive, a read-only memory, a random access memory, a magnetic disk, an optical disk, or other media that may store program code.

The various embodiments in this specification are described in a progressive manner, with each embodiment focusing on the differences from other embodiments, and the same or similar parts between the embodiments may be referred to each other.

The above description of the disclosed embodiments enables those skilled in the art to implement or use the present invention. Various modifications to these embodiments will be obvious to those skilled in the art, and the general principles defined herein may be implemented in other embodiments without departing from the spirit or scope of the present invention. Therefore, the present invention will not be limited to the embodiments shown herein, but rather shall conform to the widest scope consistent with the principles and novel features disclosed herein.

## Claims

1. A charging control method, applied to a charging device, comprising:
determining a target proprietary protocol chip corresponding to a device parameter of a device to be charged, wherein the target proprietary protocol chip comprises a target charging protocol corresponding to the device parameter;
triggering an initialization of a power chip in the charging device based on a comparison between a currently running charging protocol of the charging device and the target charging protocol to change the currently running charging protocol to the target charging protocol;
acquiring status information of the power chip, wherein the status information is used to indicate a progress of the initialization of the power chip; and
triggering the charging device to charge the device to be charged using the target proprietary protocol chip after the status information indicates that the initialization of the power chip has been completed.

2. The method according to claim 1, wherein the acquiring the status information of the power chip comprises:
sending a status access command to the power chip to obtain at least one piece of status information fed back by the power chip.

3. The method according to claim 2, wherein after the sending the status access command to the power chip to obtain the at least one piece of status information fed back by the power chip, further comprising:
counting the number of obtained first status information to obtain a first value, wherein the first status information is status information indicating that the initialization of the power chip has not been completed;
acquiring an operation log of the power chip if the first value is greater than a threshold; and
prohibiting the power chip from charging the device to be charged if the operation log indicates that the power chip reports an error.

4. The method according to claim 1, wherein the triggering the charging device to charge the device to be charged using the target proprietary protocol chip after the status information indicates that the initialization of the power chip has been completed comprises:
triggering the target proprietary protocol chip to regulate a charging parameter of the power chip after the status information indicates that the initialization of the power chip has been completed, to enable the power chip to charge the device to be charged based on the regulated charging parameter.

5. The method according to claim 4, wherein the triggering the target proprietary protocol chip to regulate the charging parameter of the power chip comprises:
acquiring status information of the target proprietary protocol chip in advance; and
triggering the target proprietary protocol chip to regulate the charging parameter of the power chip if the status information of the target proprietary protocol chip indicates that the chip operates normally.

6. The method according to claim 4, further comprising:
acquiring a difference between the charging parameters of the power chip in any two adjacent specified time periods during a process of the power chip charging the device to be charged based on the regulated charging parameter;
suspending the charging the device to be charged by the power chip if the difference fails to meet a preset condition; and
after controlling the target proprietary protocol chip to restart, triggering the target proprietary protocol chip which has been restarted to regulate the charging parameter of the power chip to enable the power chip to charge the device to be charged based on the regulated charging parameter.

7. The method according to claim 2, wherein after the sending the status access command to the power chip to obtain the at least one piece of status information fed back by the power chip, further comprising:
calculating a time difference between a feedback time of an n-th piece of status information and a sending time of an n-th status access command, wherein n is a positive integer; and
triggering a restart of the power chip and sending the status access command to the power chip which has been restarted if the time difference is greater than a specified time threshold.

8. A charging control apparatus, comprising:
a chip determination unit, configured to determine a target proprietary protocol chip corresponding to a device parameter of a device to be charged, wherein the target proprietary protocol chip comprises a target charging protocol corresponding to the device parameter;
an initialization unit, configured to trigger an initialization of a power chip in the charging device based on a comparison between a currently running charging protocol of the charging device and the target charging protocol to change the currently running charging protocol to the target charging protocol;
a status inquiry unit, configured to acquire status information of the power chip, wherein the status information is used to indicate a progress of the initialization of the power chip; and
a charging trigger unit, configured to trigger the charging device to charge the device to be charged using the target proprietary protocol chip after the status information indicates that the initialization of the power chip has been completed.

9. A vehicle-mounted charging device, comprising a stored program, wherein the stored program, when executed by a processor, implements the charging control method according to any one of claims 1-7.

10. A vehicle, comprising the vehicle-mounted charging device according to claim 9.

11. A computer device, comprising: a processor, a memory, and a bus, wherein the processor is connected to the memory via the bus; and
the memory is configured to store a program; and the processor is configured to execute the program, wherein the program, when executed by the processor, implements the charging control method according to any one of claims 1-7.

12. A computer-readable storage medium, comprising a stored program, wherein the stored program, when executed by a processor, implements the charging control method according to any one of claims 1-7.
